# EUROPEAN PATENT APPLICATION

(11) **EP 3 819 319 A1**
(43) Date of publication of application: **12.05.2021**
(21) Application number: 19207553.9
(22) Date of filing: 06.11.2019
(51) Int. Cl.: C08G 8/08, C08G 8/10, C08G 8/24

(54) **A POLYMERIC COMPOUND COMPRISING DOPO**

(71) Applicant: Metadynea Austria GmbH, 3500 Krems (AT)
(72) Inventor: ZICH, Thomas, 4020 LINZ (AT); BAUMGARTNER, Georg, 3500 Krems (AT); SCHMIEDL, Christian, 64646 Heppenheim, Hessen, (DE)
(74) Representative: Hoyng Rokh Monegier B.V.

(57) **Abstract**

The invention relates to a process for the preparation of a polymeric compound comprising DOPO, which process comprises the steps: a) Providing a DOPO monomer having a structure according formula I: 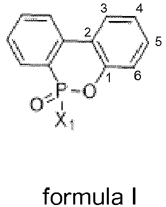 wherein X₁ is H, alkyl or hydroxyalkyl, preferably chosen from the group consisting of H, CH₃, CH₂OH, C₂H₅, and C₂H₄OH, b) contacting the DOPO monomer with a base in aqueous solution, c) adding formaldehyde and/or a precursor thereof, d) reacting the DOPO monomer and the formaldehyde, e) adding an acid. The invention also relates to the polymeric compound comprising DOPO obtainable by the process having DOPO segments in the chain and to the use thereof as flame retardant.

## Description

### Field of the invention

The invention relates to a process for the preparation of a polymeric compound comprising 6H-dibenz[c,e][1,2]oxaphosphorin-6-oxide (hereafter referred to as DOPO), to a polymeric compound comprising one or more DOPO segments, to the use of the polymeric compound comprising DOPO as flame retardant and to a resin composition comprising a resin and, as a flame retardant additive, the polymeric compound comprising DOPO.

### Description of the background art

The use of DOPO as flame retardant component is well known in the art. EP2682398B1 describes oligomers of the addition product from salicylaldehyde and DOPO, which is produced by thermally induced condensation of the adduct to produce phosphorus-containing oligomer compositions with increased solvent solubility, which are used as a flame retardant in epoxy resins.

Liu et al., J. Polym. Sci. Polym. Chem. Ed. 40, 2329-2339, 2002 have described the addition of DOPO to terephthalaldehyde for use in epoxy resins. Subsequent condensation with phenol gave flame-retardant oligomers with a novolak structure.

Liu et al., Polymer 42, 3445-3454, 2001 describe the synthesis of a reactive DOPO-derivative that is the reaction product of DOPO and 4-hydroxybenzaldehyde. Via a self-addition reaction, a DOPO-containing novolak polymeric compound was prepared with multi-phenol groups in the molecular chain. These DOPO-containing novolak compounds can be used as flame retardants in epoxy resins.

Similar concepts have been described in US8648154 describing addition of DOPO to parahydroxybenzaldehyde followed by subsequent polycondensation with formaldehyde on the phenol moiety to produce a novolak-type polymer.

J.Y. Shieh and C.S. Wang, in J. Appl. Polym. Sci. 78, 1636-1644, 2000, describe the reaction of a DOPO derivative with a phenol novolak. The novolaks prepared in this way are used for flame-retarded epoxy resins.

EP2773699 B1 describes esterification of the OH groups of different phenol novolaks with a DOPO derivative.

The prior art DOPO-containing polymeric compounds work as flame retardants primarily at high temperatures in the gas phase, typically at temperatures above about 500°C, but do not sufficiently perform as flame retardant at lower temperatures. For many flame-retardant applications, low temperature flame retardancy activity in the solid phase is desired in addition to the flame poisoning at high temperatures.

In addition, a disadvantage of prior art DOPO compounds is that significant amounts of these DOPO-containing compounds are required to achieve good flame retardancy levels, which is disadvantageous from economic point of view but also because higher amounts of flame-retardant additives in a resin or plastic material can influence the material properties thereof.

Apart from that, the prior art processes for the preparation of the DOPO containing polymeric compounds involve DOPO derivatives that are not commercially available and are difficult and laborious to synthesize, as they involve, for example, inert conditions and expensive reactants. Also, these processes have a low atomic efficiency.

Accordingly, the problem underlying the invention is to provide a process for the preparation of a polymeric compound comprising DOPO that does not have, or has to a lesser extent, one or more of the above-mentioned disadvantages of the prior art and to provide a polymeric compound comprising DOPO that has improved flame retardancy properties.

### Brief summary of the invention

According to the invention there is provided a process for the preparation of a polymeric compound comprising DOPO, which process comprises the steps:
a. Providing a DOPO monomer having a structure according formula I: 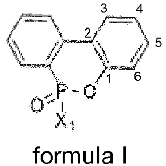 wherein X₁ is H, alkyl or hydroxyalkyl, preferably chosen from the group consisting of H, CH₃, CH₂OH, C₂H₅, and C₂H₄OH,
b. contacting the DOPO monomer with a base in aqueous solution,
c. adding formaldehyde (II) and/or a precursor thereof,
d. reacting the DOPO monomer (I) and the formaldehyde (II),
e. adding an acid.

The process of the invention results in a polymeric compound with endocyclic DOPO groups, which means that the DOPO groups are segments in the main chain of the polymer, as opposed to being reacted onto a polymer main chain (exocyclic DOPO groups).

The process of the invention is very economic and has high atomic efficiency as it involves a simple condensation reaction of DOPO with formaldehyde. Due to the direct use of DOPO, the reaction can be carried out as a one-pot variant.

It has been found that the polymeric compound comprising endocyclic DOPO groups according to the invention provides flame retardancy in both the condensed phase at lower temperatures as well as at high temperatures in the gas phase.

### Brief description of drawings

**FIG. 1****:** Schematic representation of the synthesis of a polymeric compound comprising endocyclic DOPO segments according to the invention.
**FIG. 2****:** Schematic representation of the synthesis of a copolymeric compound with endocyclic DOPO groups according to the invention.
**FIG. 3****:** Thermograms of polymeric compounds comprising DOPO according to the invention and polymeric compounds according to the prior art.

### Detailed description of the invention

The first step a) in the process for the preparation of a polymeric compound comprising DOPO, is to provide a DOPO monomer having a structure according formula I: 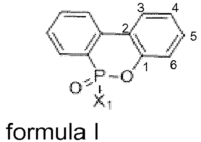 wherein X₁ is H, alkyl or hydroxyalkyl, preferably chosen from the group consisting of H, CH₃, CH₂OH, C₂H₅, and C₂H₄OH,

It is noted that the rings in the DOPO compound can be substituted as long as the substituent groups do not hinder reaction on the 4 and 6 position.

Suitable flame retardant DOPO molecules of formula I are known in the art and include, but are not limited to, the following compounds of general structure I: 6H-dibenz[c,e][1,2]oxaphosphorine-6-oxide (DOPO, CAS No. 35948-25-5), 6H-dibenzo[c,e][1,2]-oxaphosphorin-6-methanol-6-oxide (DOPO-methanol, CAS No. 35948-26-6.), 6-ethyldibenzo[c,e][1,2]oxaphosphinine 6-oxide(ethyl DOPO), CAS No. 836644-23-6).

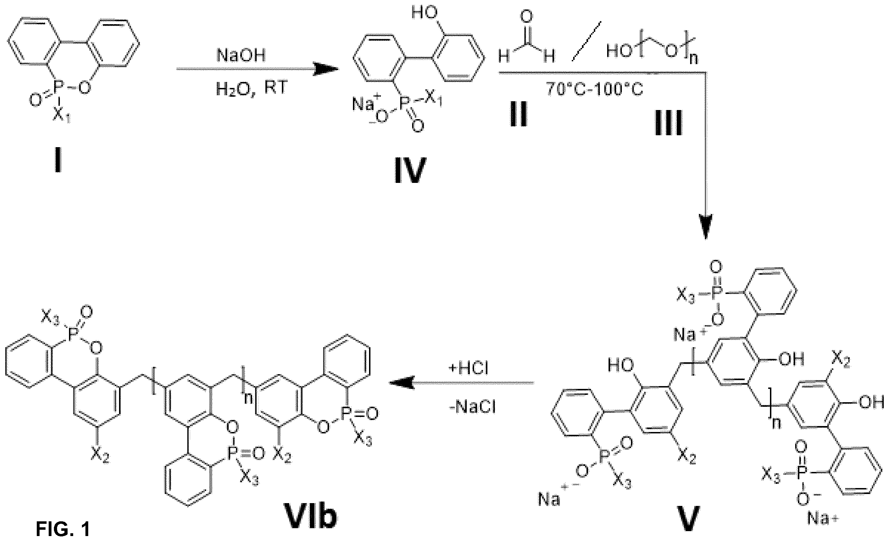

The DOPO monomer is used in the process of the invention as illustrated in FIG. 1. The polymeric compounds comprising DOPO according to the invention are prepared in a three-step process, using formaldehyde (structure II) or paraformaldehyde (structure III), and DOPO compounds of the general structure I.

It is noted that this and other process schemes herein illustrate only one way of reacting of the reactants and does not imply limitation to the represented molecules. In particular, this does not exclude different isomers or stereo- isomers of the depicted structures used and obtained in the process. Hereafter, reference is made to the molecule structure numbers as indicated in this and other reaction schemes.

Process step b) involves contacting the DOPO monomer (I) with a base in aqueous solution. Preferred bases are hydroxide salts, most preferably NaOH and KOH. The base is preferably added as aqueous solution to the DOPO monomer to prevent too quick reaction and heating of the solution. It is preferred that process step b) takes place at a temperature below 40°C, preferably below 30°C, more preferably below 25 °C and above 5 or 10°C in view of avoiding overheating of the reaction mixture as result of the reaction exotherm and avoid necessity of an intermediate cooling step.

The addition of base is essential, since the aromatic DOPO-ring in the closed state does not undergo a chemical reaction with formaldehyde and thus does not result in a polymer. The step b) involves the ring opening of the DOPO-ring of the DOPO monomer according to formula I induced by the addition of a base to form the corresponding phosphinic acid (structure IV). This step opens up a new field of chemical reactions, since the aromatic groups of the closed form of the DOPO monomer are chemically difficult to modify. The open form of the DOPO monomer is reactive on the ortho- and para position (positions 4 and 6) with formaldehyde. After the reaction in step d), the closed form of the DOPO monomer can be restored by adding hydrochloric acid (step e) as shown in FIG. 1.

Thus, in step c) formaldehyde (II) and/or a precursor thereof is added to the aqueous mixture comprising the open form of the DOPO compound. A suitable precursor is paraformaldehyde (III), which depolymerizes to formaldehyde in the aqueous base environment. Suitable formaldehyde sources are formaldehyde (CAS no. 50-00-0) or paraformaldehyde (CAS no. 30525-89-4). Preferably, in step c) the molar ratio of formaldehyde (II) to the DOPO monomer (I) is 1:1 to 2:1. This is the ratio of the starting materials at the beginning of the polymerization. As chemically a maximum of 2 equivalents of formaldehyde can react with one molecule of DOPO, an additional increase in the proportion of formaldehyde will not result in any further change in the resulting product. If the proportion of formaldehyde is chosen to be sub-stoichiometric, the polymerization proceeds incompletely and, in addition to the desired compound Via or Vlb, also unreacted DOPO-methanol will precipitate upon addition of HCl. It is noted that in case X₁ = H, the molar ratio of formaldehyde to DOPO monomer preferably is between 2:1 and 3:1 because one equivalent of the formaldehyde will react with X₁ = H to form a methanol group.

The pH in step c) is between 8 and 10. The pH must not be too high, otherwise formaldehyde disproportionates to methanol and formic acid. In view of obtaining a high conversion reaction of DOPO with formaldehyde the pH preferably is between 9.0 and 9.5, more preferably between 9.1 and 9.3. The pH is in general chosen so as to have on one hand complete conversion of formaldehyde at the reaction temperature (preferably 70°C), so that preferably the free formaldehyde at the end of the reaction step is below 0.2, preferably below 0.1% but on the other hand without the formaldehyde being disproportionated. Here and hereafter, unless indicated otherwise, a percentage implies weight % relative to total weight.

In step d) the DOPO monomer and the formaldehyde are reacted. As the open form of the DOPO monomer has two reactive positions 4 and 6, a polymerisation reaction takes place between DOPO monomers and formaldehyde groups via polycondensation (structure V). The polymerisation can be done in ways known in the art for formaldehyde condensation resins, in particular Novolak type of resins. In a particularly preferred embodiment, the reaction step d) comprises
1. heating to temperature T1 between 40°C and 90°C, preferably between 50°C and 80°C, more preferably between 60°C and 80°C, then
2. increasing the temperature to T2 between 80 - 120°C, preferably between 90°C and 110°C, preferably between 95 °C and 105°C and wherein T2 > T1,
wherein preferably temperature T1 is maintained between 40°C and 90°C until substantially all formaldehyde has reacted, preferably for at least 5h, 10h or even at least 15h and wherein temperature T2 is maintained at T2 > T1 between 80 - 120°C preferably for at least 1h, 2h, 4h or even at least 8h.

The process preferably also comprises a cooling step to bring the temperature below 40°C, preferably below 30°C, more preferably below 25°C preferably after reaction step d) and preferably before step e). In step e) an acid is added, wherein the DOPO ring is closed again (structure VIa-b); see FIG.1. Preferably, the acid is a protic acid, preferably hydrochloric acid, preferably added as an acidic solution and preferably added after cooling at room temperature. The pH after acidification is below 7, typically between 5 and 6.

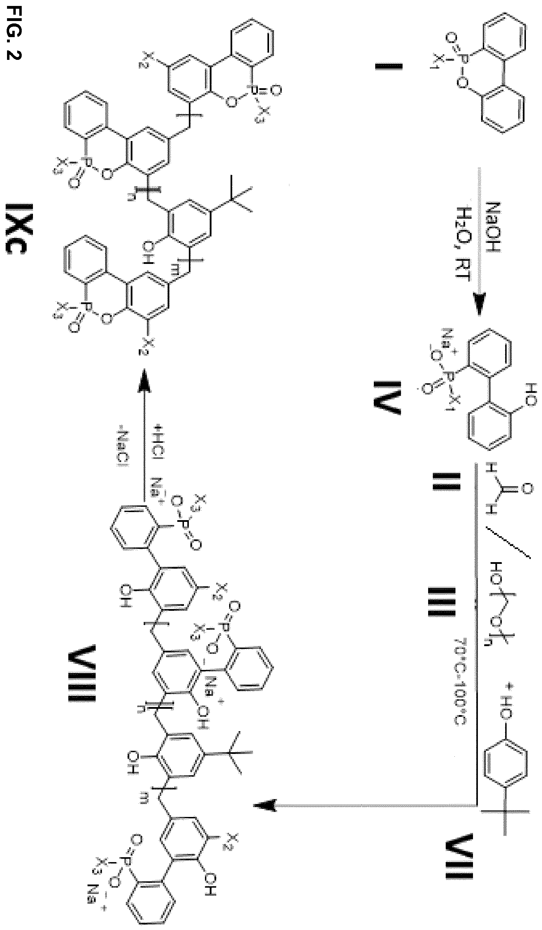

In an alternative embodiment of the invention, in the process according to the invention a phenolic co-monomer is added to the DOPO monomer and formaldehyde before or during reaction step d), preferably an alkyl substituted phenolic co-monomer, as is shown in FIG. 2. Suitable phenolic components include but are not limited to the following compounds of general structure VII: 4-tert-butylphenol (CAS No. 98-54-4). In this process, random terpolymers (structure VIII) can be prepared by reaction of the co-monomerwith formaldehyde and the DOPO monomer. Good results were obtained with 4-tert-Butylphenol (structure VII).

The relative amounts of the DOPO monomer and the co-monomer can in principle vary between wide ranges. In a preferred embodiment, the molar ratio of the starting materials is selected so that at the beginning of the polymerisation, the ratio of compound IV and VII is between 1:1 and 1:3 at the beginning of the reaction and the ratio of compound II or III to compounds IV and VII is between molar and bimolar (1:1 to 2:1).

The invention also relates to a polymeric compound comprising DOPO obtainable by the process of the invention, characterised in having the DOPO group built in the polymer main chain.

The invention relates to a polymeric compound comprising a polymer chain comprising one or more DOPO segments in the polymer chain having a structure according to formula VIa: 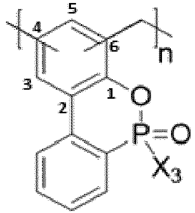 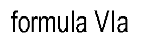 wherein X₃ is alkyl or hydroxyalkyl, preferably chosen from the group consisting of CH₃, CH₂OH, C₂H₅ or C₂H₄OH and wherein n is at least 1, wherein the DOPO segment is connected in the polymer chain by methylene groups on the C₄ and the C₆ position. In a particular embodiment, in the case where n is 2 or more, the DOPO segment is connected in the polymer chain by methylene groups on the C₄ and/or the C₆ position.

In a particular embodiment, the polymeric compound of the invention has a structure according to formula Vlb 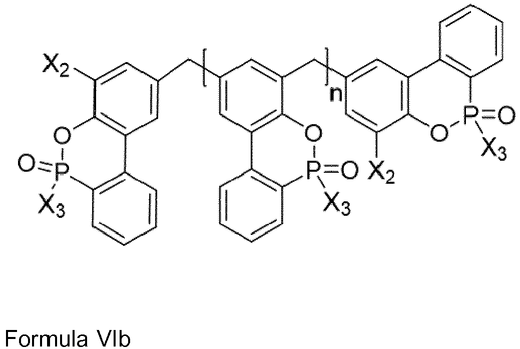 wherein X₂ is H or CH₂OH and wherein X₃ is alkyl or hydroxyalkyl, preferably chosen from the group consisting of CH₃, CH₂OH, C₂H₅ or C₂H₄OH.

In an alternative embodiment the polymeric compound of the invention is a copolymer comprising DOPO and a phenolic co-monomer, preferably comprising a DOPO segment in the polymer chain, having a structure according to formula IXa 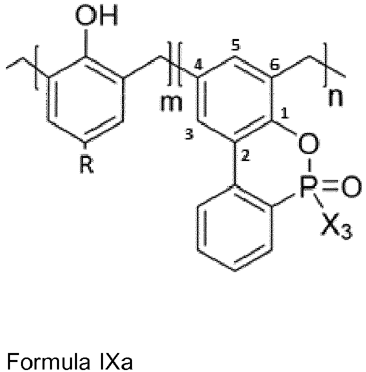 wherein R is alkyl, preferably a 4-tert-butyl group, wherein X₃ is alkyl or hydroxyalkyl, preferably chosen from the group consisting of CH₃, CH₂OH, C₂H₅ or C₂H₄OH, wherein n ≥ 1 and wherein m ≥ 1.

In a particular embodiment, the polymeric compound comprising DOPO of the invention has a structure according to formula IXb or IXc: 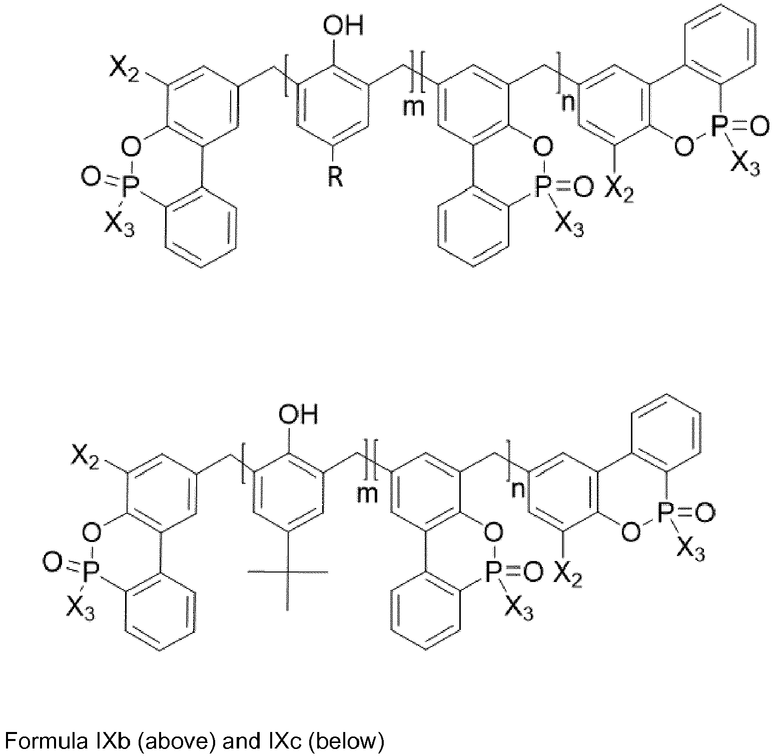 Wherein X₂ is H or CH₂OH, wherein X₃ is alkyl or hydroxyalkyl, preferably chosen from the group consisting of CH₃, CH₂OH, C₂H₅ or C₂H₄OH and wherein R is an alkyl.

It has been found that the polymeric compound comprising DOPO according to the invention provides flame retardancy in both the condensed phase at lower temperatures as well as at high temperatures in the gas phase.

The primary activity is up to a temperature of about 500°C in the condensed phase. Above this temperature, additional activity in the gas phase is achieved by release of PO radicals.

The polymeric compound comprising DOPO of the invention is characterised by a marginal migration capacity, a higher thermal stability and improved incorporation (blending) in resins. In addition, the polymeric compounds according to the invention only slightly affect the material properties.

The polymeric compounds comprising DOPO of the invention are characterised by an increased thermal stability in comparison to the monomeric DOPO-methanol. In addition to the DOPO-related gas phase activity, the polymeric compounds comprising DOPO according to the invention also have strong residue formation. Strong residue formation is an indicator of activity in the condensed phase. This result is surprising, since DOPO is known to work well in the gas phase.

Pyrolysis GC-MS has shown that the polymeric compound according to the invention releases DOPO fragments at higher temperatures. This is an indicator of activity in the gas phase additional to the activity in the condensed phase. Thus, it is was found possible to realize two different flame protection mechanisms by means of a single polymeric compound of the invention.

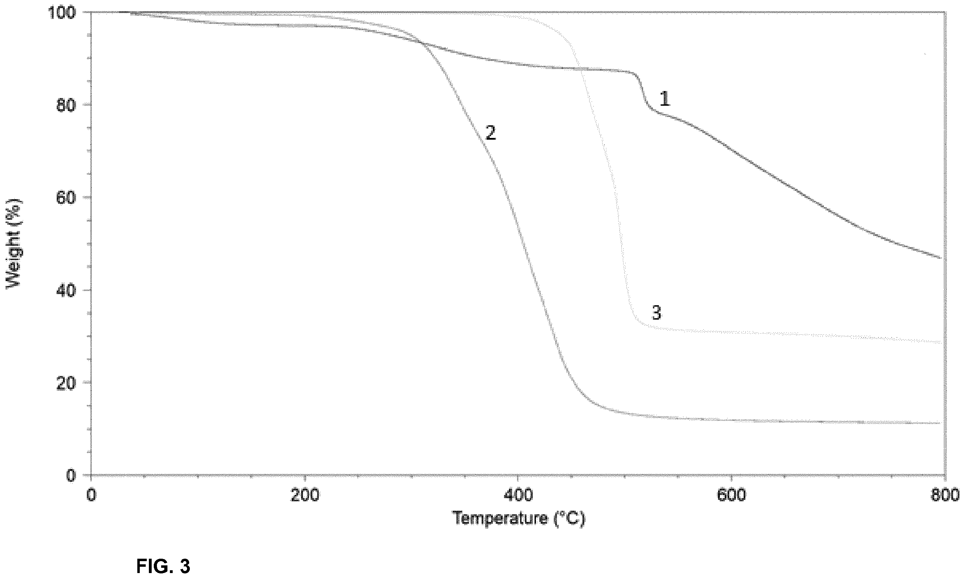

FIG. 3 shows pyrolysis TGA thermograms of prior art exocyclic DOPO compounds and polymeric compounds comprising DOPO according to the invention (measured at a heating rate of 10 °C/min), comparing the polymeric compound of the invention (curve 1) with commercial product Epiclon HFC-X (curve 2) and a DOPO-novolak (curve 3). As can be seen in curve 1, the onset of degradation of the polymeric compound comprising DOPO of the invention is comparable to that of curve 2 (Epiclon HFC-X) at about 250°C - 260°C. For Epiclon HFC-X (curve 2), starting from this temperature, the elimination of DOPO from the polymer chain takes place. This extends up to 500 °C. The DOPO novolak (curve 3) has a significantly higher thermal stability up to about 400°C, above which mass loss results from the cleavage of DOPO. From a temperature of about 500 °C onwards, the mass is constant.

The degradation behavior of Epiclon HFC-X (curve 2) is similar to that of the DOPO novolak (curve 3), except for the somewhat lower thermal stability. In both cases DOPO is split off and at about 500°C, the constant weight is set. The degradation behavior of the polymeric compound comprising DOPO of the invention (curve 1) is very different. It can be seen that degradation of the polymer occurs in two stages. In the first stage from about 260 to 350°C, the cleavage of formaldehyde takes place. In the range of 350°C - 500°C, a plateau value sets, at which no more mass change occurs. From 500 °C onwards, the mass continues to gradually decrease up to 50 % of the relative mass at 800°C. This latter mass loss is due to the cleavage of DOPO fragments from the polymer backbone. For practical application, this indicates that the polymeric compound comprising DOPO according to the invention only has a gas phase activity at higher temperatures.

The above flame retardancy properties are very valuable for use in a very wide temperature range. Thus, the invention also relates to the use of the polymeric compound comprising DOPO according to the invention as flame retardant, preferably for providing flame retardancy at temperatures between 200 - 800°C. The use particularly relates to use as flame retardant additive in plastic compositions or resin compositions. The high concentration of DOPO groups in the compound implies that a lower amount of polymeric compound is sufficient to achieve sufficient flame retardancy and a lower amount has a lower disadvantageous effect on the properties of the material in which the flame retardant is used.

Therefore the invention also relates to a resin composition comprising a resin, preferably an epoxy resin comprising as a flame retardant additive, the polymeric compound comprising DOPO according to the invention.

### DESCRIPTION OF THE EXAMPLES

### Determination of the proportion of free formaldehyde

150 mL distilled water is placed in a 250 ml beaker. Then the sample is weighed exactly to 3 digits. The titration is performed on a Titrando 809 (Metrohm). The pH of the sample solution is adjusted to pH 9.3 with 1N potassium hydroxide solution. Then 25 mL of 10% sodium sulfite solution is added. When sulfite is added to free formaldehyde, hydroxide anions are released, and the pH rises. Using 1N sulfuric acid, the solution is then back titrated to pH 9.3. From the consumption of acid, the amount of formaldehyde contained in the sample can be determined and consequently the mass fraction of free formaldehyde can be determined.

### Experimental protocols

NMR measurements were carried out with a Bruker Nanobay 300 (300 MHz). Proton NMR data were measured relative to tetramethylsilane (TMS).

TGA measurements were carried out with a TGA Q500 from TA Instruments under a nitrogen atmosphere in the range between 30 and 800°C. The heating rate for all measurements was 10°C/minute.

GPC analyses were performed with a system comprising of a 1260 IsoPump G1310B (Agilent Technologies, Santa Clara, CA, USA), a 1260 UV detector - G1314F at 254 nm (Agilent Technologies) and a 1260 RI detector - G1362A (Agilent Technologies) at 35 °C with DMF (with addition of LiBr (1 g/L)) as mobile phase (flow rate 1 mL/min). The column material used was a GRAM column set for DMF (at 50 °C) from PSS (Polymer Standard Service, Mainz) (GRAM 30, GRAM 1000, GRAM 1000). The calibration was performed with PMMA standards for DMF from PSS. The measured samples had a concentration of 2 mg/mL. The PDI (polydispersity index) was determined as the quotient of mass-average (Mw) and number-average molecular weight (Mn).

### Example 1 - Polymerization of DOPO-methanol with 1.5 equivalents of formaldehyde

493 g (2.01 mol) of DOPO-methanol were dissolved in 962 g (2.41 mol) of a 10% sodium hydroxide solution. After the exothermic reaction subsided, 164.1 g (3.01 mol) of 55% formalin solution was added at 70 °C. After 18 h reaction time at 70°C, the content of free formaldehyde was 0.3 %. Subsequently, the temperature was raised to 100 °C and held for 8 h. After cooling the reaction mixture to room temperature, 250.7 g (2.41 mol) 35 % HCI was added while vigorously stirring, resulting in the precipitation of the product. The resulting white solid was filtered off, washed twice with water and then dried for 24 h at 150°C in a convection oven.

The process and the obtained product of Example 1 is characterised by the following features:
Yield: 95%, ³¹P-NMR (DMSO-d₆) δ : 32.04-35.4 ppm, ¹H-NMR (DMSO-d₆) δ : 3.79-4.3 ppm (2H, P-CH₂ +1.46H, Ar-CH₂-Ar); 4.48-4.8 ppm (0.94 H, Ar-CH₂) ; 5.19-5.4 ppm (0.33H, ArCH₂-OH); 5.4-5.73 ppm (0.92, P-CH₂ -OH) ; 7.18-8.38 ppm (6.1 H, Ar-H), TGA (N₂, 10 °C /min.): T_{1%} = 250 °C, T_{10%} = 400 °C, residual mass at 800 °C = 55%, GPC (DMF + LiCI, refractive index detector):, Number average molecular 100 (Mₙ) = 1226 Da, Weight average molecular weight (M_{w}) = 1500 Da, Polydispersity index (PDI) = 1.22.

### Example 2 - Polymerization of DOPO-methanol with 1.35 equivalents of formaldehyde

250 g (1.02 mol) of DOPO-methanol were dissolved in 487.5 g (1.22 mol) of a 10% sodium hydroxide solution. After the exothermic reaction subsided, 74,8 g (1.37 mol) of 55 % strength formalin solution were added at 70°C. After 7.5 h reaction time at 70°C, the content of free formaldehyde was 0.04%. Subsequently, the temperature was raised to 100°C and held for 8 h. After cooling the reaction mixture 127 g (1.22 mol) 35 % HCI was added while vigorously stirring, resulting in the precipitation of the resulting product. The resulting white solid was filtered off, washed twice with water and then dried for 24 h at 150 °C in a convection oven.

The process and the obtained product of Example 2 is characterised by the following features:
Yield: 94%, ³¹P-NMR (DMSO-d₆) δ : 32.34-35.4 ppm, ¹H-NMR (DMSO-d₆) δ : 3.86-4.34 ppm (2H, P-CH₂ +1.73 H, Ar-CH₂ -Ar); 4.52-4.77 ppm (0.61 H, Ar-CH₂); 5.22-5.89 ppm (0.8H , ArCH₂-OH + P-CH₂-OH); 7.16-8.37 ppm (6H, Ar-H), TGA (N₂, 10°C / min): T_{1%} = 250 °C, T_{10%} = 400 °C, residual mass at 800 °C = 47%, GPC (DMF + LiCl, refractive index detector):, Number average molecular weight (Mₙ) = 1298 Da , Weight average molecular weight (M_{w}) = 1651 Da , Polydispersity Index (PDI) = 1.27.

### Example 3 - Polymerization of DOPO with and 2.35 equivalents of formaldehyde

200 g (0.93 mol) of DOPO were dissolved in in 370 g (0.93 mol) of a 10% sodium hydroxide solution. After the exothermic reaction subsided, 118.6 g (2.17 mol) of a 55% formalin solution were added at 70°C. Subsequently, the temperature was raised to 100°C and held for 14 h up to a residual content of 3.4% of free formaldehyde. The temperature was lowered to 70 °C and a further 74 g (0.19 mol) of a 10% sodium hydroxide solution was added. The temperature was held for 7 hours until the content of free formaldehyde was 0.1%. Subsequently, the temperature was raised to 100°C and held for 8 h. After cooling the reaction mixture 115.7 g (1.11 mol) of 35% HCI solution was added while vigorously stirring, resulting in the precipitation of the resulting product. The white solid obtained was filtered off, washed twice with water and then dried for 24 h at 150 °C in a convection oven.

The process and the obtained product of Example 3 is characterised by the following features:
Yield: 92%, ³¹P-NMR (DMSO-d₆) δ : 32.59-35.26 ppm, ¹H-NMR (DMSO-d₆) δ : 3.75-4.36 ppm (2H, P-CH₂ +1.52 H, Ar-CH₂-Ar); 4.44-4.88 ppm (0.83H, Ar-CH₂); 5.19-5.76 ppm (0.95 H, Ar-CH₂-OH + P-CH₂-OH); 7.08 -8.37 ppm (6,1 H, Ar-H), TGA (N₂, 10 °C /min) : T_{1%} = 250 °C, T_{10%} = 400 °C, residual mass at 800 °C = 51%, GPC (DMF + LiCI, refractive index detector): Number average molecular weight (Mₙ) = 1228 Da , Weight average molecular weight (M_{w}) = 1462 Da, Polydispersity Index (PDI) = 1.17.

### Example 4 - Polymerization of DOPO-methanol with p-tert-butyl-phenol (1:1) and 1.1 equivalents of formaldehyde

150 g (0.61 mol) of DOPO-methanol and 91.6 g (0.61 mol) of p-tert-butyl-phenol were dissolved in 296.4 g (0.74 mol) of a 10% sodium hydroxide solution. After the exothermic reaction subsided, 73.1 g (1.34 mol) of 55 % formalin solution was added at 70°C. After 5.5 h reaction time at 70°C, the content of free formaldehyde was 0.07%. Subsequently, the temperature was raised to 100 °C and held for 2 h. After cooling the reaction mixture , 77.1 g (0.74 mol) of a 35% HCI solution were added while vigorously stirring, resulting in precipitation of the resulting product. The yellow obtained solid was filtered off, washed twice with water and dried for three days at 60 °C in a convection oven.

The process and the obtained product of Example 4 is characterised by the following features:
Yield: 93 %, ³¹P-NMR (DMSO-d₆) δ : 30.16-31.49 ppm (4.6%), 32.78-34.49 ppm (95.4 %),
¹H-NMR (DMSO-d₆) δ : 0.91 to 1.32 ppm (9H, CH₃); 3.71 to 4.35 ppm (2 H, P-CH₂ +2.81 H, Ar-CH₂-Ar); 4.51-4.82 ppm (1.62H, Ar-CH₂); 6,85- 8,74 ppm (8 H, Ar-H), TGA (N₂, 10 °C /min): T_{1%} = 250 °C, T_{10%} = 320 °C, residual mass at 800 °C = 37%, GPC (DMF + LiCI, refractive index detector):, Number average molecular weight (Mₙ) = 2173 Da, Weight-average molecular weight (M_{w}) = 4153 Da, Polydispersity Index (PDI) = 1.91.

## Claims

1. A process for the preparation of a polymeric compound comprising DOPO, which process comprises the steps:
a) Providing a DOPO monomer having a structure according formula I: 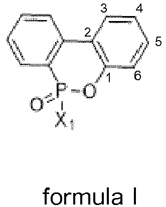 wherein X₁ is H, alkyl or hydroxyalkyl, preferably chosen from the group consisting of H, CH₃, CH₂OH, C₂H₅, and C₂H₄OH,
b) contacting the DOPO monomer with a base in aqueous solution,
c) adding formaldehyde and/or a precursor thereof,
d) reacting the DOPO monomer and the formaldehyde,
e) adding an acid.

2. The process according to claim 1 wherein step b) takes place at a temperature below 40°C, preferably below 30°C, more preferably below 25 °C and above 5 or 10°C.

3. The process according to any of the preceding claims, wherein the pH in step c) is between 8 and 10, preferably between 9.0 and 9.5, more preferably between 9.1 and 9.3.

4. The process according to any of the preceding claims wherein in step c) the molar ratio of formaldehyde to DOPO monomer is 1:1 to 2:1 and in case X₁ = H the molar ratio of formaldehyde to DOPO monomer preferably is 2:1.

5. The process according to any of the preceding claims, wherein the reaction step d) comprises
1. heating to temperature T1 between 40°C and 90°C, preferably between 50°C and 80°C, more preferably between 60°C and 80°C, then
2. increasing the temperature to T2 between 80 - 120°C, preferably between 90°C and 110°C, preferably between 95 °C and 105°C and wherein T2 > T1,
wherein preferably temperature T1 is maintained between 40°C and 90°C until substantially all formaldehyde has reacted, preferably for at least 5h, 10h or even at least 15h and
wherein temperature T2 is maintained at T2 > T1 between 80 - 120°C preferably for at least 1h, 2h, 4h or even at least 8h.

6. The process according to any of the preceding claims, further comprising cooling to a temperature below 40°C, preferably below 30°C, more preferably below 25°C after reaction step d) and preferably before step e).

7. The process according to any of the preceding claims, wherein the acid is a protic acid, preferably hydrochloric acid, preferably added as an acidic solution.

8. The process according to any of the preceding claims wherein a phenolic co-monomer is added to the DOPO monomer and formaldehyde before or during reaction step d), preferably an alkyl substituted phenolic co-monomer, preferably 4-tert-Butylphenol (VII).

9. A polymeric compound comprising a polymer chain comprising one or more DOPO segments in the polymer chain having a structure according to formula VIa: 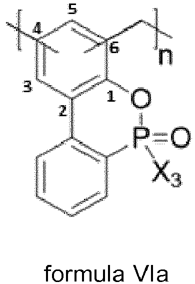 wherein X₃ is alkyl or hydroxyalkyl, preferably chosen from the group consisting of CH₃, CH₂OH, C₂H₅ or C₂H₄OH and wherein n is at least 1, wherein the DOPO segment is connected in the polymer chain by methylene groups on the C₄ and the C₆ position.

10. The polymeric compound of claim 9 having a structure according to formula Vlb 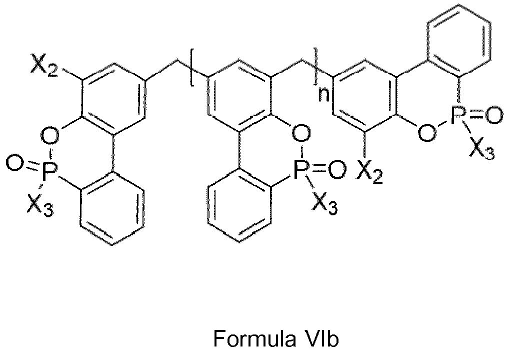 wherein X₂ is H or CH₂OH.

11. The polymeric compound of claim 9, being a copolymer of DOPO and a phenolic co-monomer, preferably comprising a DOPO segment in the polymer chain having a structure according to formula IXa 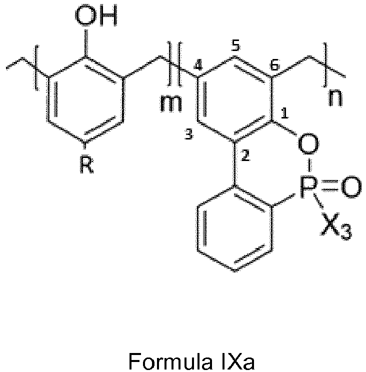 wherein R is alkyl, preferably a 4-tert-butyl group,wherein n ≥ 1 and wherein m ≥ 1.

12. The polymeric compound of claim 11 having a structure according to formula IXb or IXc:

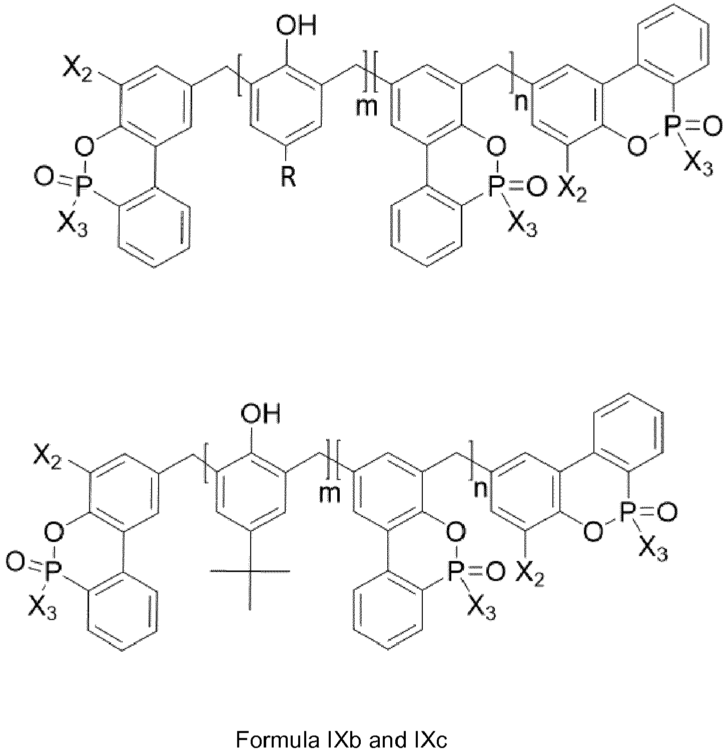

13. A polymeric compound comprising DOPO obtainable by the process according to the claims 1 - 8, **characterised in** having DOPO monomers built in the polymer main chain.

14. Use of the polymeric compound comprising DOPO according to any of claims 9-13 as flame retardant, preferably for providing flame retardancy at temperatures between 200 - 800°C.

15. Resin composition comprising a resin, preferably an epoxy resins, comprising as flame retardant additive the polymeric compound comprising DOPO according to anyone of claims 9 - 13.
